# EUROPEAN PATENT APPLICATION

(11) **EP 4 407 539 A1**
(43) Date of publication of application: **31.07.2024**
(21) Application number: 22891896.7
(22) Date of filing: 04.11.2022
(51) Int. Cl.: G06Q 10/10, G06F 9/451

(54) **SCHEDULE-BASED INFORMATION PROCESSING METHOD AND APPARATUS**

(30) Priority: 11.11.2021 CN 202111335511
(71) Applicant: Beijing Zitiao Network Technology Co., Ltd., Beijing 100190 (CN)
(72) Inventor: LIU, Zhaoyi, Beijing 100086 (CN); SUN, Jian, Beijing 100086 (CN)
(74) Representative: Dentons UK and Middle East LLP
(86) International application number: PCT/CN2022/129759
(87) International publication number: WO 2023/083101

(57) **Abstract**

The present application discloses a schedule-based information processing method, the method being executable by a client. The client may acquire at least one to-do schedule of a user, and then display on a first page reminder information corresponding to a first schedule in the least one to-do schedule and an shortcut entry corresponding to the first schedule, the first page being an instant messaging application interface. The shortcut entry comprises: a session entry and/or a multimedia conference entry, the session entry being used to trigger an operation corresponding to a session, and the multimedia conference entry being used to trigger an operation corresponding to a multimedia conference. It may thus be seen that the reminder information and the shortcut entry of the first schedule are displayed on the first page, and when the user desires to trigger an operation related to a multimedia conference and/or a session corresponding to the first schedule on the basis of the reminder information, the user can directly trigger the operation related to the multimedia conference and/or the session on the basis of the shortcut entry on the instant messaging application interface without entering an interface corresponding to the first schedule, which is convenient for the user to operate.

## Description

### CROSS-REFERENCE TO RELATED APPLICATION

The present application claims priority to Chinese Patent Application No. 202111335511.5, filed with the China National Intellectual Property Administration on November 11, 2021, and entitled "SCHEDULE-BASED INFORMATION PROCESSING METHOD AND APPARATUS", which is incorporated herein by reference in its entirety.

### TECHNICAL FIELD

The present disclosure relates to the field of data processing, and in particular to a schedule-based information processing method and apparatus.

### BACKGROUND

Some applications may provide a schedule creation feature to make it easier for users to work according to plans. For a schedule, there may be one or more participants.

The schedule may be further configured with a corresponding multimedia meeting, so that the participants in the schedule can jointly discuss a work item corresponding to the schedule through the multimedia meeting. In addition, when there are a plurality of participants in the schedule, the schedule may be further configured with a corresponding chat, so that the participants in the schedule can use the chat to jointly discuss the work item corresponding to the schedule.

At present, to discuss an item corresponding to a schedule through at least one of a multimedia meeting and a chat, a participant in the schedule needs to perform a series of cumbersome operations, which is inefficient.

### SUMMARY

The technical problem to be solved by the present disclosure is as follows: To discuss an item corresponding to a schedule through at least one of a multimedia meeting and a chat, a participant in the schedule needs to perform a series of cumbersome operations, which is inefficient. A schedule-based information processing method and apparatus are provided.

According to a first aspect, an embodiment of the present disclosure provides a schedule-based information processing method. The method includes:
obtaining at least one to-do schedule of a user; and
displaying, on a first page, reminder information corresponding to a first schedule in the to-do schedule and a quick entry corresponding to the first schedule, the quick entry including at least one of a chat entry and a multimedia meeting entry, where the chat entry is configured to trigger an operation corresponding to a chat, the multimedia meeting entry is configured to trigger an operation corresponding to a multimedia meeting, and the first page is an instant messaging application interface.

Optionally, the quick entry includes the multimedia meeting entry configured to initiate or join a multimedia meeting associated with the first schedule.

Optionally, the quick entry includes the chat entry configured to create or enter a chat associated with the first schedule.

Optionally, the multimedia meeting is a third-party multimedia meeting, and the method further includes:
jumping to a web page corresponding to the third-party multimedia meeting or opening an application corresponding to the third-party multimedia meeting, in response to an operation triggered by the user on the multimedia meeting entry.

Optionally, if the chat associated with the first schedule has not been created, the method further includes:
creating a chat corresponding to the first schedule in response to an operation triggered by the user on the chat entry, where a participant in the first schedule is automatically determined as a member of the chat.

Optionally, the first schedule is a schedule with a highest priority in the at least one to-do schedule.

Optionally, the first schedule is a schedule with an earliest start time in the at least one to-do schedule.

Optionally, the first schedule is a schedule with a time difference between a start moment and a current moment less than a preset time difference in the at least one to-do schedule.

Optionally, the first schedule is a schedule for which a multimedia meeting has started in the at least one to-do schedule.

Optionally, the reminder information further includes a number identifier determined based on a number of to-do schedules.

Optionally, the method further includes:
displaying a second page in response to an operation triggered by the user on the reminder information, the second page presenting detailed information of the first schedule and the quick entry for the first schedule.

Optionally, the method further includes:
presenting, on the second page, a switching control for switching between detailed information of and a quick entry for each to-do schedule, in response to the number of the to-do schedules exceeding a preset number.

Optionally, the method further includes:
in response to an operation triggered on the switching control, associatively presenting, on the first page, reminder information and a quick entry for a to-do schedule corresponding to the second page after the operation is triggered.

Optionally, the reminder information corresponding to the first schedule and the quick entry corresponding to the first schedule are presented on the first page in the form of a pop-up window or a floating window.

Optionally, the reminder information corresponding to the first schedule and the quick entry corresponding to the first schedule are presented in a preset area of the first page.

Optionally, the instant messaging application interface is a page displayed by default when a target application is running.

According to a second aspect, an embodiment of the present disclosure provides a schedule-based information processing apparatus. The apparatus includes:
an obtaining unit configured to obtain at least one to-do schedule of a user; and
a first display unit configured to display, on a first page, reminder information corresponding to a first schedule in the to-do schedule and a quick entry corresponding to the first schedule, the quick entry including at least one of a chat entry and a multimedia meeting entry, where the chat entry is configured to trigger an operation corresponding to a chat, the multimedia meeting entry is configured to trigger an operation corresponding to a multimedia meeting, and the first page is an instant messaging application interface.

Optionally, the quick entry includes the multimedia meeting entry configured to initiate or join a multimedia meeting associated with the first schedule.

Optionally, the quick entry includes the chat entry configured to create or enter a chat associated with the first schedule.

Optionally, the multimedia meeting is a third-party multimedia meeting, and the apparatus further includes:
a processing unit configured to jump to a web page corresponding to the third-party multimedia meeting or open an application corresponding to the third-party multimedia meeting, in response to an operation triggered by the user on the multimedia meeting entry.

Optionally, if the chat associated with the first schedule has not been created, the apparatus further includes:
a creation unit configured to create a chat corresponding to the first schedule in response to an operation triggered by the user on the chat entry, where a participant in the first schedule is automatically determined as a member of the chat.

Optionally, the first schedule is a schedule with a highest priority in the at least one to-do schedule.

Optionally, the first schedule is a schedule with an earliest start time in the at least one to-do schedule.

Optionally, the first schedule is a schedule with a time difference between a start moment and a current moment less than a preset time difference in the at least one to-do schedule.

Optionally, the first schedule is a schedule for which a multimedia meeting has started in the at least one to-do schedule.

Optionally, the reminder information further includes a number identifier determined based on a number of to-do schedules.

Optionally, the apparatus further includes:
a second display unit configured to display a second page in response to an operation triggered by the user on the reminder information, the second page presenting detailed information of the first schedule and the quick entry for the first schedule.

Optionally, the apparatus further includes:
a third display unit configured to present, on the second page, a switching control for switching between detailed information of and a quick entry for each to-do schedule, in response to the number of the to-do schedules exceeding a preset number.

Optionally, the apparatus further includes:
a fourth display unit configured to: in response to an operation triggered on the switching control, associatively present, on the first page, reminder information and a quick entry for a to-do schedule corresponding to the second page after the operation is triggered.

Optionally, the reminder information corresponding to the first schedule and the quick entry corresponding to the first schedule are presented on the first page in the form of a pop-up window or a floating window.

Optionally, the reminder information corresponding to the first schedule and the quick entry corresponding to the first schedule are presented in a preset area of the first page.

Optionally, the instant messaging application interface is a page displayed by default when a target application is running.

According to a third aspect, an embodiment of the present disclosure provides a device. The device includes a processor and a memory.

The processor is configured to execute instructions stored in the memory to cause the device to perform the method of any one of the embodiments of the first aspect above.

According to a fourth aspect, an embodiment of the present disclosure provides a computer-readable storage medium, including instructions to instruct a device to perform the method of any one of the embodiments of the first aspect above.

According to a fifth aspect, an embodiment of the present disclosure provides a computer program product, which, when running on a computer, causes the computer to perform the method of any one of the embodiments of the first aspect above.

The embodiments of the present disclosure have the following advantages over the prior art.

The embodiments of the present disclosure provide a schedule-based information processing method, which, for example, may be performed by a client. In an example, the client may obtain at least one to-do schedule of a user, and then display, on a first page, reminder information corresponding to a first schedule in the to-do schedule and a quick entry corresponding to the first schedule, where the first page is an instant messaging application interface. The quick entry includes at least one of a chat entry and a multimedia meeting entry, where the chat entry is configured to trigger an operation corresponding to a chat, and the multimedia meeting entry is configured to trigger an operation corresponding to a multimedia meeting. It can be seen that in the embodiments of the present disclosure, the reminder information and the quick entry for the first schedule are displayed on the first page, and when the user desires to trigger an operation related to at least one of the multimedia meeting and the chat corresponding to the first schedule based on the reminder information, the user may directly trigger the operation related to at least one of the multimedia meeting and the chat based on the quick entry on the instant messaging application interface without entering an interface corresponding to the first schedule, which makes it convenient for the user to operate.

### BRIEF DESCRIPTION OF DRAWINGS

In order to more clearly describe the technical solutions in the embodiments of the present disclosure or in the prior art, the drawings for describing the embodiments or the prior art will be briefly described below. Apparently, the drawings in the description below show merely some embodiments recited in the present disclosure, and persons of ordinary skill in the art may still derive other drawings from these drawings without creative efforts.
FIG. 1 is a schematic flowchart of a schedule-based information processing method according to an embodiment of the present disclosure;
FIG. 2 is a schematic diagram of a first page according to an embodiment of the present disclosure; and
FIG. 3 is a schematic diagram of a structure of a schedule-based information processing apparatus according to an embodiment of the present disclosure.

### DETAILED DESCRIPTION

In order for persons skilled in the art to better understand the solutions of the present disclosure, the technical solutions in the embodiments of the present disclosure will be described below clearly and completely with reference to the accompanying drawings in the embodiments of the present disclosure. Apparently, the embodiments described are merely some rather than all of the embodiments of the present disclosure. All other embodiments obtained by persons of ordinary skill in the art based on the embodiments of the present disclosure without creative efforts fall within the scope of protection of the present disclosure.

The inventors of the present disclosure have found by research that for a first schedule, to discuss an item corresponding to the first schedule through at least one of a multimedia meeting and a chat, a participant in the first schedule needs to perform a series of cumbersome operations, which is inefficient.

In an example, to discuss the item corresponding to the first schedule through a multimedia meeting, the participant in the first schedule first needs to find the first schedule from numerous schedules, then enters a management page for the first schedule, and then can perform an operation related to the multimedia meeting corresponding to the first schedule.

Similarly, to discuss the item corresponding to the first schedule through a chat, the participant in the first schedule also needs to perform a series of cumbersome operations. For example, the participant in the first schedule needs to find, from numerous contacts and chats, a chat that corresponds to the first schedule. For another example, the participant in the first schedule needs to find the management page for the first schedule, so as to determine other participants in the first schedule and create a chat corresponding to the first schedule.

In order to solve the above problems, an embodiment of the present disclosure provides a schedule-based information processing method.

Various non-limiting implementations of the present disclosure will be described in detail below with reference to the accompanying drawings.

### Exemplary method

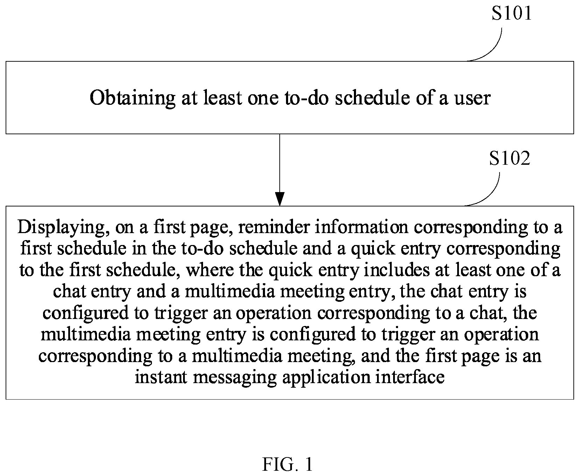

FIG. 1 is a schematic flowchart of a schedule-based information processing method according to an embodiment of the present disclosure. In this embodiment, the method may be performed by a client. The method may be implemented by steps S101 and S102.

S101, obtaining at least one to-do schedule of a user.

In an example, the client may be a target application client. The user mentioned here may be, for example, a user corresponding to an account logged in on the client.

In an example, in a specific implementation of S101, at least one to-do schedule of the user within a preset period of time may be obtained. The preset period of time is not specifically limited in the embodiments of the present disclosure. In an example, the preset period of time may be from a current moment to a moment in the future, and a duration of the preset period of time may be, for example, 30 minutes.

In this embodiment of the present disclosure, the to-do schedule may be a schedule that has not ended. The schedule that has not ended may be, for example, a schedule whose end time is after the current moment.

S102, displaying, on a first page, reminder information corresponding to a first schedule in the to-do schedule and a quick entry corresponding to the first schedule, where the quick entry includes at least one of a chat entry and a multimedia meeting entry, the chat entry is configured to trigger an operation corresponding to a chat, the multimedia meeting entry is configured to trigger an operation corresponding to a multimedia meeting, and the first page is an instant messaging application interface.

In this embodiment of the present disclosure, the first schedule may be one of the to-do schedules. Displaying the reminder information for the first schedule may remind the user to handle an item related to the first schedule. The reminder information for the first schedule may include, for example, a name of the first schedule, a status of the first schedule, etc. If the first schedule has not started, the status of the first schedule may be, for example: the first schedule is starting in ** minutes. If the first schedule has already started, the status of the first schedule may be, for example: the first schedule is in progress. In addition, if the first schedule is configured with a multimedia meeting and the multimedia meeting is in progress, the status of the first schedule may be, for example: a video meeting for the first schedule is in progress.

In an example, for the at least one to-do schedule, different schedules may have different priorities. A priority of a schedule may be determined based on the importance and/or urgency of the schedule, for example. The higher the priority of the schedule, the more the user hopes that the schedule can be handled promptly. Therefore, in an example, the first schedule may be a schedule with a highest priority in the at least one to-do schedule.

In another example, to allow the user to handle the schedules as pre-scheduled, the first schedule may be a schedule with an earliest start time in the at least one to-do schedule.

In yet another example, to enable the user to reasonably handle a schedule whose start time is close to a current time, the first schedule is a schedule with a time difference between a start moment and a current moment less than a preset time difference in the at least one to-do schedule. The preset time difference is not specifically limited in the embodiments of the present disclosure, and can be determined according to actual conditions.

In yet another example, a multimedia meeting may be configured for a schedule, and a participant in the schedule may discuss an item related to the schedule through the multimedia meeting. Therefore, the first schedule may be a schedule for which a multimedia meeting has started in the at least one to-do schedule. In this way, displaying the reminder information for the first schedule may remind the user to join the multimedia meeting as soon as possible to avoid missing the content of the multimedia meeting related to the first schedule.

In this embodiment of the present disclosure, in addition to the reminder information for the first schedule, a quick entry corresponding to the first schedule may further be displayed on the first page, the quick entry including at least one of a chat entry and a multimedia meeting entry. The chat entry is configured to trigger an operation corresponding to a chat, and the multimedia meeting entry is configured to trigger an operation corresponding to a multimedia meeting.

In an example, if the first schedule is configured with a multimedia meeting, the quick entry includes the multimedia meeting entry. If the first schedule is not configured with a multimedia meeting, the quick entry does not include the multimedia meeting entry. A creator of the first schedule may choose to or not to configure a multimedia meeting for the first schedule when creating the first schedule.

It should be noted that the multimedia meeting corresponding to the first schedule may be a multimedia meeting provided by the target application, or may be a third-party multimedia meeting. This is not specifically limited in the embodiments of the present disclosure. In an example, if the multimedia meeting is a third-party multimedia meeting, when creating the first schedule, the creator of the first schedule may book a multimedia meeting through a web page corresponding to the third-party multimedia meeting or an application corresponding to the third-party multimedia meeting, so as to obtain a link to the multimedia meeting; and then enters the meeting link into a corresponding meeting link input area, so as to subsequently join the multimedia meeting through the meeting link. In an example, if the multimedia meeting is a multimedia meeting provided by the target application, the client may directly generate a meeting link for the multimedia meeting.

In this embodiment of the present disclosure, the multimedia meeting entry is configured to initiate or join a multimedia meeting associated with the first schedule.

In an example, if the multimedia meeting corresponding to the first schedule has already started, the multimedia meeting entry is configured to trigger an operation of joining the multimedia meeting. In other words, if the multimedia meeting corresponding to the first schedule has already started, the user may join the multimedia meeting through the multimedia meeting entry. In this case, the user may trigger an operation on the multimedia meeting entry. For example, the user may click on the multimedia meeting entry. The client may add the user to the multimedia meeting in response to the operation triggered by the user on the multimedia meeting entry. Specifically, if the multimedia meeting is a multimedia meeting provided by the target application, the client may display a corresponding multimedia meeting page. If the multimedia meeting is a third-party meeting, the client may jump to a web page corresponding to the third-party multimedia meeting, or open an application corresponding to the third-party multimedia meeting.

In an example, if the multimedia meeting corresponding to the first schedule has not started, the multimedia meeting entry is configured to trigger an operation of initiating the multimedia meeting. That is, the user may directly initiate the multimedia meeting corresponding to the first schedule through the multimedia meeting entry. In this case, the user may trigger an operation on the multimedia meeting entry, for example, click on the multimedia meeting entry. The client may initiate the multimedia meeting corresponding to the first schedule in response to the operation triggered by the user on the multimedia meeting entry. Specifically, if the multimedia meeting is a multimedia meeting provided by the target application, the client may display a corresponding multimedia meeting page. If the multimedia meeting is a third-party meeting, the client may jump to a web page corresponding to the third-party multimedia meeting, or open an application corresponding to the third-party multimedia meeting.

In this embodiment of the present disclosure, the quick entry includes the chat entry configured to create or enter a chat associated with the first schedule. If there are two participants in the first schedule, the chat is a chat involving only two users; and if there are at least three participants in the first schedule, the chat is a group chat.

In an example, if the chat already exists, for example, if there is a historically posted instant message in the chat involving the two users, or if a group corresponding to the first schedule has been created, the chat entry is configured to enter the chat associated with the first schedule. In this case, after the user triggers an operation on the chat entry, the client may display an instant messaging application interface corresponding to the chat.

If the chat does not exist, for example, if there is no instant message in the chat involving the two users, or if the group corresponding to the first schedule has not been created, the chat entry is configured to create the chat associated with the first schedule. In this case, if there are only two participants in the first schedule, after the user triggers an operation on the chat entry, the client may display an instant messaging application interface for the user and the other participant. If there are at least three participants in the first schedule, after the user triggers an operation on the chat entry, the client may create a group corresponding to the first schedule and display an instant messaging application interface corresponding to the group.

When the client creates the chat corresponding to the first schedule, a participant in the first schedule is automatically determined as a member of the chat. In this way, the user can quickly create the chat corresponding to the first schedule, which makes it convenient to operate. In an example, after the user triggers an operation on the chat entry, the client may further display prompt information to prompt the user to determine whether to create the chat. For example, the prompt information is displayed in the form of a pop-up window. After the user determines to create the chat (for example, clicks on a "Confirm" control on the pop-up window), the chat corresponding to the first schedule is then created.

In this embodiment of the present disclosure, the first page may be a page displayed by the target application. In an example, the first page may be a page displayed by default when the target application is running. For example, for a target application that can provide features such as instant messaging, calendar, and cloud documents, the first page may be a page that displays content related to instant messaging, that is, an instant messaging application interface. For example, the first page may display a plurality of instant messaging record identifiers of the user, where one instant messaging record identifier is used to identify a messaging record between the user and another individual user or group. The user may use the instant messaging record identifier to trigger an operation of opening a corresponding instant messaging interface.

In this case, upon opening the target application, the user can view the reminder information corresponding to the first schedule and the quick entry corresponding to the first schedule, and trigger a corresponding operation through the quick entry, which makes it convenient for the user to operate.

In an example, the client may display the reminder information corresponding to the first schedule and the quick entry corresponding to the first schedule on the first page in the form of a pop-up window or a floating window.

In an example, the client may display the reminder information corresponding to the first schedule and the quick entry corresponding to the first schedule in a preset area of the first page. For example, the client may display the reminder information corresponding to the first schedule and the quick entry corresponding to the first schedule in a specific area at the top of the first page.

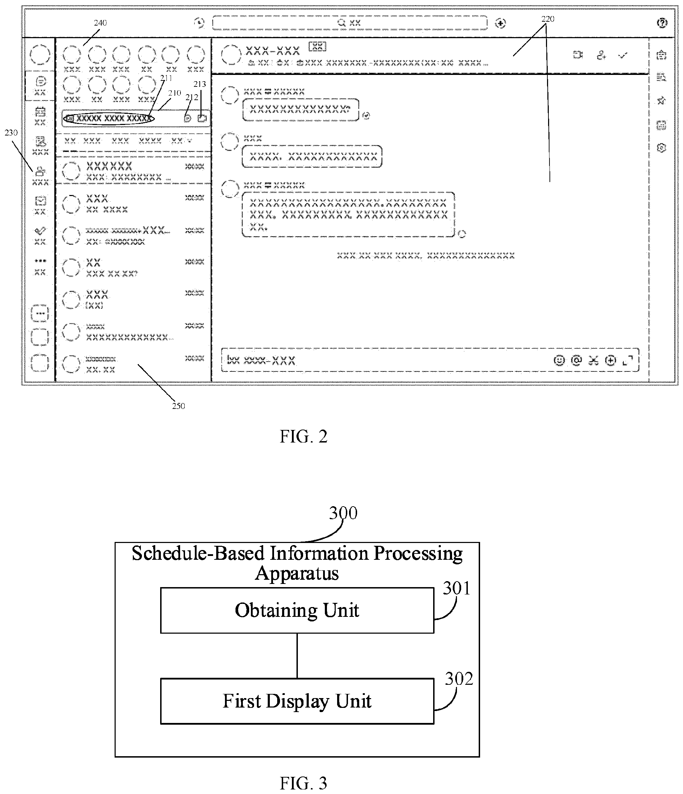

The first page may be understood with respect to FIG. 2, and FIG. 2 is a schematic diagram of a first page according to an embodiment of the present disclosure. It should be noted that FIG. 2 is shown merely for ease of understanding and is not intended to limit the embodiments of the present disclosure.

As shown in FIG. 2, reminder information 211, a chat entry 212, and a multimedia meeting entry 213 for the first schedule are displayed in an area 210 of the first page. In addition, an area 220 of the first page is an interface corresponding to a chat; content displayed in an area 230 of the first page is features provided by the target application and version information of the target application; content displayed in an area 240 of the first page is some of the user's contacts (for example, contacts that the user has contacted within a specific period of time); and content displayed in an area 250 of the first page is the user's chat list. The area 220, the area 230, the area 240, and the area 250 are not described in detail here.

In addition, the user also has interest in the other schedules in the at least one to-do schedule, in addition to the first schedule. Therefore, in an example, the reminder information may further include a number identifier determined based on a number of to-do schedules. For example, a number identified by the number identifier is equal to a total number of the other schedules, so as to prompt the user how many to-do schedules there are in addition to the first schedule within the preset period of time. The other schedules are other schedules than the first schedule in the at least one to-do schedule. By way of example, if the user has four to-do schedules within 30 minutes, the number identifier may be the number "3". In this case, the reminder information that can be displayed on the first page may be, for example: "Schedule A is starting in 3 minutes +3".

In an example, the user may use the reminder information to trigger an operation of viewing detailed information of the first schedule. For example, the user may trigger an operation on the reminder information, for example, click on the reminder information. Then, the client may display a second page in response to the operation triggered by the user on the reminder, where the second page presents the detailed information of and the quick entry for the first schedule. In this way, the user can view the detailed information of the first schedule on the second page, and directly trigger an operation on the chat entry or the multimedia meeting entry on the second page when the user desires to perform an operation related to a chat or a multimedia meeting.

In an example, the detailed information of the first schedule may include but is not limited to: a name of the first schedule, a start time and an end time of the first schedule, a list of participants of the first schedule, whether the first schedule is configured with a multimedia meeting, whether a physical meeting room is booked for the first schedule, other notes, etc.

In addition, the first page may further display summary information of the other schedules, where the summary information of the schedules may include, for example: names of the schedules, start times and end times of the schedules, etc. The other schedules mentioned here are other schedules than the first schedule in the at least one to-do schedule.

In an example, when the at least one to-do schedule in S101 is a plurality of schedules, the second page may further include a switching control for switching between detailed information of and a quick entry for each to-do schedule. In this case, if the user triggers an operation on the switching control, for example, clicks on the switching control, the client may display detailed information of and a quick entry for a second schedule in response to the operation. In this case, a to-do schedule corresponding to the second page is the second schedule.

In an example, after the user triggers an operation on the switching control because the user has more interest in the second schedule, the client may associatively present, on the first page, reminder information and a quick entry for the second schedule. In this way, the user can promptly view the reminder information for the second schedule and trigger a related operation on the quick entry for the second schedule after the user closes the second page.

For the detailed information of the second schedule, the reminder information for the second schedule, and the quick entry for the second schedule, reference may be made to the above related descriptions of the detailed information of the first schedule, the reminder information for the first schedule, and the quick entry for the first schedule, and details are not repeated here.

### Exemplary device

On the basis of the method provided in the above embodiments, an embodiment of the present disclosure further provides an apparatus. The apparatus will be described below with reference to the accompanying drawings.

FIG. 3 is a schematic diagram of a structure of a schedule-based information processing apparatus according to an embodiment of the present disclosure. For example, the apparatus 300 may specifically include: an obtaining unit 301 and a first display unit 302.

The obtaining unit 301 is configured to obtain at least one to-do schedule of a user.

The first display unit 302 is configured to display, on a first page, reminder information corresponding to a first schedule in the to-do schedule and a quick entry corresponding to the first schedule, the quick entry including at least one of a chat entry and a multimedia meeting entry, where the chat entry is configured to trigger an operation corresponding to a chat, the multimedia meeting entry is configured to trigger an operation corresponding to a multimedia meeting, and the first page is an instant messaging application interface.

Optionally, the quick entry includes the multimedia meeting entry configured to initiate or join a multimedia meeting associated with the first schedule.

Optionally, the quick entry includes the chat entry configured to create or enter a chat associated with the first schedule.

Optionally, the multimedia meeting is a third-party multimedia meeting, and the apparatus further includes:
a processing unit configured to jump to a web page corresponding to the third-party multimedia meeting or open an application corresponding to the third-party multimedia meeting, in response to an operation triggered by the user on the multimedia meeting entry.

Optionally, if the chat associated with the first schedule has not been created, the apparatus further includes:
a creation unit configured to create a chat corresponding to the first schedule in response to an operation triggered by the user on the chat entry, where a participant in the first schedule is automatically determined as a member of the chat.

Optionally, the first schedule is a schedule with a highest priority in the at least one to-do schedule.

Optionally, the first schedule is a schedule with an earliest start time in the at least one to-do schedule.

Optionally, the first schedule is a schedule with a time difference between a start moment and a current moment less than a preset time difference in the at least one to-do schedule.

Optionally, the first schedule is a schedule for which a multimedia meeting has started in the at least one to-do schedule.

Optionally, the reminder information further includes a number identifier determined based on a number of to-do schedules.

Optionally, the apparatus further includes:
a second display unit configured to display a second page in response to an operation triggered by the user on the reminder information, the second page presenting detailed information of the first schedule and the quick entry for the first schedule.

Optionally, the apparatus further includes:
a third display unit configured to present, on the second page, a switching control for switching between detailed information of and a quick entry for each to-do schedule, in response to the number of the to-do schedules exceeding a preset number.

Optionally, the apparatus further includes:
a fourth display unit configured to: in response to an operation triggered on the switching control, associatively present, on the first page, reminder information and a quick entry for a to-do schedule corresponding to the second page after the operation is triggered.

Optionally, the reminder information corresponding to the first schedule and the quick entry corresponding to the first schedule are presented on the first page in the form of a pop-up window or a floating window.

Optionally, the reminder information corresponding to the first schedule and the quick entry corresponding to the first schedule are presented in a preset area of the first page.

Optionally, the instant messaging application interface is a page displayed by default when a target application is running.

Since the apparatus 300 is an apparatus corresponding to the method provided in the above method embodiments, a specific implementation of each unit of the apparatus 300 belongs to the same concept as the above method embodiments. Therefore, for the specific implementation of each unit of the apparatus 300, reference may be made to the descriptions of the above method embodiments, and details are not repeated here.

An embodiment of the present disclosure provides a device. The device includes a processor and a memory.

The processor is configured to execute instructions stored in the memory to cause the device to perform the method of any one of the above method embodiments.

An embodiment of the present disclosure provides a computer-readable storage medium, including instructions to instruct a device to perform the method of any one of the above method embodiments.

An embodiment of the present disclosure provides a computer program product, which, when running on a computer, causes the computer to perform the method of any one of the above method embodiments.

Persons skilled in the art may readily figure out other implementation solutions of the present disclosure after considering the specification and practicing the invention disclosed herein. The present disclosure is intended to cover any variations, purposes, or adaptive changes of the present disclosure. Such variations, purposes, or applicable changes follow the general principle of the present disclosure and include common knowledge or conventional technical means in the art which is not disclosed in the present disclosure. The specification and embodiments are merely considered as examples, and the true scope and spirit of the present disclosure are defined by the appended claims.

It should be understood that the present disclosure is not limited to the exact structure that has been described above and shown in the accompanying drawings, and various modifications and changes may be made without departing from the scope of the present disclosure. The scope of the present disclosure is defined only by the appended claims.

The above description is only the preferred embodiments of the present disclosure and is not intended to limit the present disclosure. Any modifications, equivalent substitutions, improvements, etc. made within the spirit and principles of the present disclosure shall fall within the scope of protection of the present disclosure.

## Claims

1. A schedule-based information processing method, comprising:
obtaining at least one to-do schedule of a user; and
displaying, on a first page, reminder information corresponding to a first schedule in the to-do schedule and a quick entry corresponding to the first schedule, wherein the quick entry comprises at least one of a chat entry and a multimedia meeting entry, the chat entry is configured to trigger an operation corresponding to a chat, the multimedia meeting entry is configured to trigger an operation corresponding to a multimedia meeting, and the first page is an instant messaging application interface.

2. The method according to claim 1, wherein the quick entry comprises the multimedia meeting entry configured to initiate or join a multimedia meeting associated with the first schedule.

3. The method according to claim 1, wherein the quick entry comprises the chat entry configured to create or enter a chat associated with the first schedule.

4. The method according to claim 2, wherein the multimedia meeting is a third-party multimedia meeting, and the method further comprises:
jumping to a web page corresponding to the third-party multimedia meeting or opening an application corresponding to the third-party multimedia meeting, in response to an operation triggered by the user on the multimedia meeting entry.

5. The method according to claim 3, wherein if the chat associated with the first schedule has not been created, the method further comprises:
creating a chat corresponding to the first schedule in response to an operation triggered by the user on the chat entry, wherein a participant in the first schedule is automatically determined as a member of the chat.

6. The method according to claim 1, wherein the first schedule is a schedule with a highest priority in the at least one to-do schedule.

7. The method according to claim 1, wherein the first schedule is a schedule with an earliest start time in the at least one to-do schedule.

8. The method according to claim 1, wherein the first schedule is a schedule with a time difference between a start moment and a current moment less than a preset time difference in the at least one to-do schedule.

9. The method according to claim 1, wherein the first schedule is a schedule for which a multimedia meeting has started in the at least one to-do schedule.

10. The method according to claim 1, wherein the reminder information further comprises a number identifier determined based on a number of to-do schedules.

11. The method according to claim 10, further comprising:
displaying a second page in response to an operation triggered by the user on the reminder information, the second page presenting detailed information of the first schedule and the quick entry for the first schedule.

12. The method according to claim 11, further comprising:
presenting, on the second page, a switching control for switching between detailed information of and a quick entry for each to-do schedule, in response to the number of the to-do schedules exceeding a preset number.

13. The method according to claim 12, further comprising:
in response to an operation triggered on the switching control, associatively presenting, on the first page, reminder information and a quick entry for a to-do schedule corresponding to the second page after the operation is triggered.

14. The method according to claim 1, wherein the reminder information corresponding to the first schedule and the quick entry corresponding to the first schedule are presented on the first page in the form of a pop-up window or a floating window.

15. The method according to claim 1, wherein the reminder information corresponding to the first schedule and the quick entry corresponding to the first schedule are presented in a preset area of the first page.

16. The method according to claim 1, wherein the instant messaging application interface is a page displayed by default when a target application is running.

17. A schedule-based information processing apparatus, comprising:
an obtaining unit, configured to obtain at least one to-do schedule of a user; and
a first display unit, configured to display, on a first page, reminder information corresponding to a first schedule in the to-do schedule and a quick entry corresponding to the first schedule, wherein the quick entry comprises at least one of a chat entry and a multimedia meeting entry, the chat entry is configured to trigger an operation corresponding to a chat, the multimedia meeting entry is configured to trigger an operation corresponding to a multimedia meeting, and the first page is an instant messaging application interface.

18. A device, comprising a processor and a memory, wherein
the processor is configured to execute instructions stored in the memory to cause the device to perform the method according to any one of claims 1 to 16.

19. A computer-readable storage medium, comprising instructions to instruct a device to perform the method according to any one of claims 1 to 16.

20. A computer program product, wherein the computer program product, when running on a computer, causes the computer to perform the method according to any one of claims 1 to 16.
